# EUROPÄISCHE PATENTSCHRIFT

(11) **EP 1 412 227 B1**
(45) Veröffentlichungstag und Bekanntmachung des Hinweises auf die Patenterteilung: **22.09.2010**
(21) Anmeldenummer: 02750829.0
(22) Anmeldetag: 11.07.2002
(51) Int. Cl.: B60R 16/02, H04L 12/40

(54) **SCHNITTSTELLE**
INTERFACE
INTERFACE

(30) Priorität: 18.07.2001 DE 10135023
(43) Veröffentlichungstag der Anmeldung: 28.04.2004
(73) Patentinhaber: ROBERT BOSCH GMBH, 70442 Stuttgart (DE)
(72) Erfinder: KRAMP, Wolfgang, 71254 Ditzingen (DE); WAGNER, Arndt, 71735 Eberdingen (DE); SPICHALE, Thomas, 69436 Schoenbrunn (DE)
(86) Internationale Anmeldenummer: PCT/DE2002/002535
(87) Internationale Veröffentlichungsnummer: WO 2003/009145

(56) Entgegenhaltungen:
- WO-A-00/72463
- WO-A-02/100045
- DE-A- 19 640 735
- DE-A- 19 853 665
- DE-A- 19 904 544
- NUSSER R ET AL: "Bluetooth-based wireless connectivity in an automotive environment" VEHICULAR TECHNOLOGY CONFERENCE FALL 2000, 24. - 28. September 2000, XP010524360 Boston

## Beschreibung

### Stand der Technik

Die Erfindung betrifft eine Schnittstelle zum Anschluss einer ersten elektrionischen komponente an ein eine Busvorrichtung umfassendes Fahrzeugnetz. Schnittstellen zum Anschluss einer ersten elektronischen Komponente an ein Netz mehrerer elektronischer Komponenten sind beispielsweise im Kraftfahrzeug bekannt. Dort kann beispielsweise eine Klimaanlage als elektronische Komponente über ein Steuergerät an einen Fahrzeugbus, beispielsweise einen CRN-Bus angeschlossen sein, an den weitere elektronische Komponenten, wie beispielsweise ein Tastenfeld als Eingabeeinheit angeschlossen sein können.

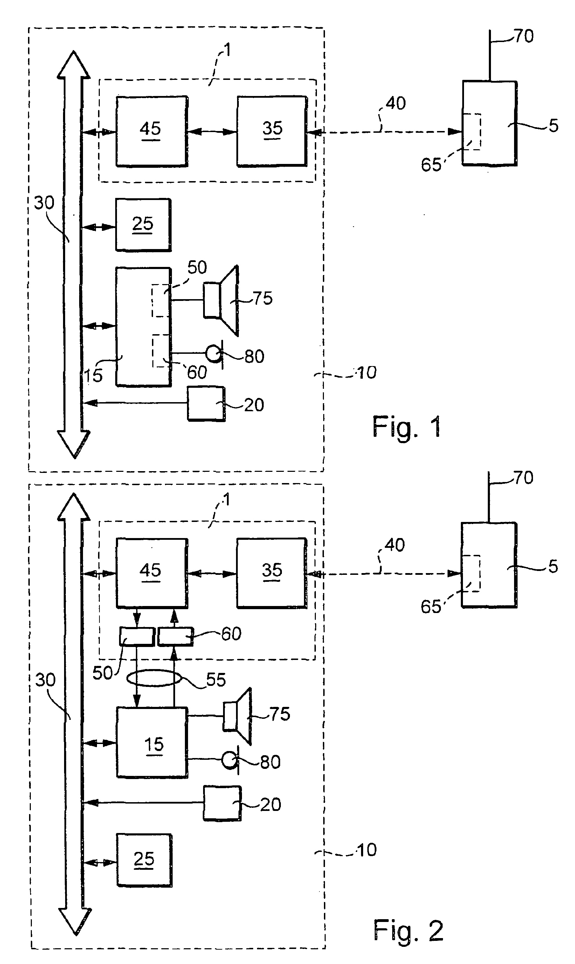

Nusser et al. "Bluetooth-based wireless connectivity in an automotive environment" IEEE Vehicular technology conference fall 2000, 24. - 28. September 2000, Boston (US), XP010524360 (nächstkommender Stand der Technik) zeigt in Fig. 2 ein System, bei welchem ein Netzwerk im Fahrzeug (Multimediabus) vorgesehen ist, an den verschiedene Geräte, u. a. auch Wiedergabegeräte, angeschlossen sind. Ferner ist eine Schnittstelle vorgesehen, in Form einer zentralen Steuereinheit, welche mit einem Telekommunikationsendgerät über eine drahtlose Verbindung verbunden ist. Über die Schnittstellenfunktion hinaus übernimmt die zentrale Steuereinheit auch weitere Funktionen, insbesondere umfasst sie eine Mensch-Maschine-Schnittstelle. Bei der bekannten Lösung ist demnach eine Eingabeeinheit vorgesehen, die nicht an das Fahrzeugnetzwerk angeschlossen, sondern Teil der Schnittstelle zwischen Fahrzeugnetzwerk und Telekommunikationsendgerät ist.

Diese Veröffentlichung beschreibt also eine Schnittstelle zum Anschluss eines Telekommunikationsendgeräts an ein eine Busvorrichtung umfassendes Fahrzeugnetz, an das eine als Freisprechvorrichtung ausgebildete Wiedergabe- oder Verarbeitungsvorrichtung für Daten des Telekommunikationsendgeräts angeschlossen ist. Die Schnittstelle, die Daten zwischen der Wiedergabe- oder Verarbeitungsvorrichtung und dem Telekommunikationsendgerät überträgt, ist an die Busvorrichtung angeschlossen und umfasst eine Steuerung, die einerseits mit der Busvorrichtung und andererseits mit einem Schnittstellenmodul der Schnittstelle verbunden ist, und die den Austausch der Daten zwischen der Wiedergabe- oder Verarbeitungsvorrichtung und dem Telekommunikationsendgerät über das Schnittstellenmodul steuert. Zwischen dem Schnittstellenmodul und einer Funkschnittstelle des Telekommunikationsendgeräts wird eine Funkverbindung aufgebaut. Ferner ist eine Eingabeeinheit an die Busvorrichtung angeschlossen, wobei die Schnittstelle an der Eingabeeinheit eingegebene Einstell- und/oder Anwahlparameter empfängt und an die Wiedergabe- und/oder Verarbeitungsvorrichtung oder an das Telekommunikationsendgerät überträgt,

in der DE 199 04 544 A1 wird eine Konfiguration vorgestellt, bei welchem eine so genannte intelligente Heimschnittstelle vorgesehen ist, an die verschiedene Geräte im Hausbereich angeschlossen sind. Diese ist über eine drahtlose Schnittstelle mit verschiedenen Geräten, insbesondere Telekommunikationsendgeräte, verbunden.

Die WO 00/72 463 A2 zeigt ein drahtloses Kommunikationssystem zwischen einem elektrischen Gerät und einem Kraftfahrzeug. Dabei werden vom elektrischen Gerät Audio- und Videodaten drahtlos an ein Gerät im Kraftfahrzeug übergeben. Das fahrzeugseitige System verfügt neben Wiedergabeeinheiten auch Eingabeeinheiten, z.B. ein Mikrofon.

### Vorteile der Erfindung

Die erfindungsgemäße Schnittstelle ist im Anspruch 1 definert. Sie ist derart aufgebaut, daß die erste elektronische Komponente als Telekommunikationsendgerät ausgebildet ist, das eine zweite an das Netz angeschlossene elektronische Komponente als Freisprechvorrichtung ausgebildet ist und daß die Schnittstelle Audiodaten zwischen der Freisprechvorrichtung und dem Telekommunikationsendgerät überträgt. Auf diese Weise werden die Freisprechvorrichtung und das Telekommunikationsendgerät an das Netz der elektronischen Komponenten angeschlossen und können so mit diesen elektronischen Komponenten kommunizieren. Ferner kann ein bestehendes Netz elektronischer Komponenten, beispielsweise im Kraftfahrzeug zum Anschluß einer Freisprechvorrichtung und eines Telekommunikationsendgerätes mitgenutzt und damit in seiner Funktionalität erhöht werden. Eine eigene Verdrahtung beziehungsweise eine direkte Verbindung wie zwischen Freisprechvorrichtung und Telekommunikationsendgerät ist dann nicht erforderlich. Die Integration der Freisprechvorrichtung und des Telekommunikationsendgerätes in ein bestehendes Netz elektronischer Komponenten erfordert außerdem nur geringen Aufwand, insbesondere dann, wenn ein bereits vorhandenes Steuergerät für den Anschluß einer elektronischen Komponente, wie beispielsweise der Klimaanlage und/oder des Tastenfeldes einer Eingabeeinheit in einem Kraftfahrzeug zum Anschluß der Freisprechvorrichtung und/oder des Telekommunikationsendgerätes an das Netz der elektronischen Komponenten mitgenutzt und somit in seiner Funktionalität erhöht wird. Dabei ist ein Schnittstellenmodul zum drahtlosen Anschluß des Telekommunikationsendgerätes vorgesehen. Auf diese Weise entfällt der Verkabelungsaufwand zwischen dem Telekommunikationsendgerät und dem Netz.

Dabei umfasst die Schnittstelle eine Steuerung, die den Austausch der Audiodaten zwischen der Freisprechvorrichtung und dem Telekommunikationsendgerät über das Schnittstellenmodul steuert. Auf diese Weise wird der Datenaustausch zwischen den beiden an das Netz angeschlossenen Komponenten gewährleistet und eine funktionale Einheit zwischen dem Telekommunikationsendgerät und der Freisprechvorrichtung gebildet.

Eine dritte elektronische Komponente ist als Eingabeeinheit ausgebildet, die an das Netz angeschlossen ist. Die Schnittstelle empfängt an der Eingabeeinheit eingegebene Einstell- und/oder Anwahlparameter und überträgt diese an die Freisprechvorrichtung oder an das Telekommunikationsendgerät. Auf diese Weise kann eine bereits vorhandene, an das Netz angeschlossene Eingabeeinheit zur Bedienung des Telekommunikationsendgerätes und/oder der Freisprechvorrichtung mitgenutzt werden, sodaß die Funktionalität einer solchen Eingabeeinheit erhöht wird. Außerdem ist es dann nicht mehr erforderlich, eine Eingabeeinheit des Telekommunikationsendgerätes zu benutzen. Dies ist besonders für den Einsatz der Erfindung in einem Kraftfahrzeug von Vorteil, wenn der Benutzer des Telekommunikationsendgerätes und der Freisprechvorrichtung möchlichst wenig vom Straßenverkehr abgelenkt werden soll und sich die an das Netz angeschlossene Eingabeeinheit im Cockpit des Fahrzeugs, in der Nähe des Lenkrads befindet.

Ein Vorteil besteht darin, daß die Steuerung zu vorgegebenen Zeiten, vorzugsweise periodisch, ein Abfragesignal an das Schnittstellenmodul abgibt, um das Vorhandensein des Telekommunikationsendgerätes zu prüfen. Auf diese Weise ist eine automatische Ankopplung des Telekommunikationsendgerätes über das Schnittstellenmodul an das Netz möglich. Eine Benutzeraktion ist dazu nicht erforderlich. Dies erhöht den Bedienkomfort für den Benutzer.

Besonders vorteilhaft ist es, daß die Steuerung bei der Detektion des Telekommunikationsendgerätes je ein Initialisierungssignal an die Freisprechvorrichtung und an das Schnittstellenmodul zur Übertragung an das Telekommunikationsendgerät abgibt, um die Sprachein-/ausgabefunktionalität auf die Freisprechvorrichtung zu übertragen. Auf diese Weise erfolgt eine automatische Umschaltung der Sprachein-/ausgabefunktionalität vom Telekommunikationsendgerät auf die Freisprechvorrichtung, ohne daß eine Benutzeraktivität erforderlich ist. Dies erhöht den Bedienkomfort für den Benutzer.

Durch die in den unteren Ansprüchen aufgeführten Maßnahmen sind vorteilhafte Weiterbildungen und Verbesserungen der im Hauptanspruch angegebenen Schnittstelle möglich.

Besonders vorteilhaft ist es, daß die Schnittstelle die Audiodaten in digitaler Form zwischen der Freisprechvorrichtung und dem Telekommunikationsendgerät überträgt. Auf diese Weise wird eine digitale Übertragung zwischen dem Telekommunikationsendgerät und der Schnittstelle unterstützt, sodaß zwischen der Schnittstelle und dem Telekommunikationsendgerät keine analoge Datenübertragung erforderlich ist.

Entsprechend vorteilhaft ist es, daß die Steuerung je ein Deinitialisierungssignal an die Freisprechvorrichtung abgibt, um die Sprachein-/ausgabefunktionalität der Freisprechvorrichtung für Telekommunikationsverbindungen zu beenden, sobald die Steuerung 45 auf das Abfragesignal die Abwesenheit des Telekommunikationsendgerätes 5 detektiert. Auf diese Weise wird eine automatische Abschaltung der Sprachein-/ausgabefunktionalität der Freisprechvorrichtung bewirkt, ohne daß eine Benutzeraktivität erforderlich ist. Auf diese Weise wird der Bedienkomfort für den Benutzer erhöht.

Besonders vorteilhaft ist es, daß als vierte elektronische Komponente ein Audiogerät an das Netz angeschlossen ist und daß die Steuerung ein Stummschaltsignal an das Audiogerät abgibt, wenn über das Schnittstellenmodul Audiosignale zwischen der Freisprecheinrichtung und dem Telekommunikationsendgerät ausgetauscht werden. Auf diese Weise kann die Wiedergabe von Audiosignalen des Audiogerätes für die Dauer eines Telefongespräches über das Telekommunikationsendgerät stummgeschaltet werden, um den Benutzer nicht vom Telefongespräch abzulenken. Die Stummschaltung erfolgt dabei automatisch, ohne daß eine Benutzeraktivität erforderlich ist. Dies ist für den Benutzer besonders komfortabel.

### Zeichnung

Ausführungsbeispiele der Erfindung sind in der Zeichnung dargestellt und in der nachfolgenden Beschreibung näher erläutert. Es zeigen Figur 1 ein Blockschaltbild einer ersten Ausführungsform der erfindungsgemäßen Schnittstelle, Figur 2 ein Blockschaltbild einer zweiten Ausführungsform der erfindungsgemäßen Schnittstelle und Figur 3 einen Ablaufplan für die Funktionsweise einer Steuerung der erfindungsgemäßen Schnittstelle.

### Beschreibung der Ausführungsbeispiele

In Figur 1 kennzeichnet 10 ein Netz mehrerer elektronischer Komponenten 5,15,20,25, das beispielsweise in einem Kraftfahrzeug angeordnet sein kann. Im Folgenden soll deshalb beispielhaft davon ausgegangen werden, daß es sich beim Netz 10 um ein Fahrzeugnetz handelt. Das Fahrzeugnetz 10 umfaßt eine Busvorrichtung 30, beispielsweise einen CAN-Bus, an den die elektronischen Komponenten 5,15,20,25 angeschlossen sind. Dabei ist eine erste elektrische Komponente 5 als Telekommunikationsendgerät ausgebildet. Eine zweite elektronische Komponente 15 ist als Freisprechvorrichtung ausgebildet. Eine dritte elektronische Komponente 20 ist vorgesehen, die als Eingabeeinheit ausgebildet ist. Optional kann eine vierte elektronische Komponente 25 vorgesehen sein, die als Audiogerät ausgebildet ist. Ferner können weitere elektronische Komponenten an die Busvorrichtung 30 angeschlossen sein, die jedoch in den Figuren nicht dargestellt sind. Dabei kann es sich beispielsweise um eine Motorsteuerung, eine Getriebesteuerung und so weiter handeln.

Im Folgenden soll die Wiedergabe- oder Verarbeitungsvorrichtung 15 als Freisprechvorrichtung ausgebildet sein.

Gemäß Figur 1 ist das Telekommunikationsendgerät 5 über eine Schnittstelle 1 an die Busvorrichtung 30 angeschlossen. Die Schnittstelle 1 umfaßt dabei eine Steuerung 45, die einerseits mit der Busvorrichtung 30 und andererseits mit einem Schnittstellenmodul 35 der Schnittstelle 1 verbunden ist. In den hier beschriebenen Ausführungsbeispielen ist das Telekommunikationsendgerät 5 beispielhaft als mobiles Telekommunikationsendgerät ausgebildet und umfaßt eine erste Funkschnittstelle 70 in Form einer Antenne zur Kommunikation mit einem Funktelekommunikationsnetz. Ferner umfaßt das Telekommunikationsendgerät 5 eine zweite Funkschnittstelle 65 zur drahtlosen Kommunikation mit dem Schnittstellenmodul 35. Zwischen dem Schnittstellenmodul 35 und der zweiten Funkschnittstelle 65 kann auf diese Weise eine Funkverbindung 40 aufgebaut werden. Diese Funkverbindung kann beispielsweise gemäß dem Bluetooth-Standard ausgebildet sein. Das Schnittstellenmodul 35 und die zweite Funkschnittstelle 65 bilden in diesem Fall eine Bluetooth-Schnittstelle. Gemäß Figur 1 ist auch die Freisprechvorrichtung 15 an die Busvorrichtung 30 angeschlossen. An die Freisprechvorrichtung 15 ist über einen Digital-/Analog-Wandler 50 ein Lautsprecher 75 angeschlossen. An die Freisprechvorrichtung 15 ist außerdem über einen Analog-/Digital-Wandler 60 ein Mikrophon 80 angeschlossen. Gemäß Figur 1 ist weiterhin die Eingabeeinheit 20, die eine im Cockpit, vorzugsweise in unmittelbarer Nähe des Lenkrads angeordnete Tastatur umfassen kann, ebenfalls an die Busvorrichtung 30 angeschlossen. Entsprechend ist gemäß Figur 1 auch das Audiogerät 25, bei dem es sich beispielsweise um ein Autoradio handeln kann, an die Busvorrichtung 30 angeschlossen, wobei alternativ in dem Audiogerät 25 der Digital-/Analog-Wandler 50 und der Lautsprecher 75 enthalten sein kann. In diesem Fall kann der Digital-/Analog-Wandler 50 und der Lautsprecher 75 an der Freisprechvorrichtung 15 entfallen..

Zum Anschluß der Freisprechvorrichtung 15, der Eingabeeinheit 20 und des Audiogerätes 25 an die Busvorrichtung 30 kann jeweils eine Steuervorrichtung vorgesehen sein, die in Figur 1 der Übersichtlichkeit halber nicht dargestellt ist und in die jeweilige elektronische Komponente 15,20,25 integriert oder von dieser abgesetzt sein kann und die Kommunikation mit den jeweils anderen an die Busvorrichtung 30 angeschlossenen elektronischen Komponenten ermöglicht. Es kann alternativ vorgesehen sein, daß die Freisprechvorrichtung 15, die Eingabeeinheit 20 und das Audiogerät 25 zusammen mit dem Schnittstellenmodul 35 über die Steuerung 45 gemeinsam an die Busvorrichtung 30 angeschlossen sind, wobei in diesem Fall die Steuerung 45 einerseits die Kommunikation zwischen dem Schnittstellenmodul 35, der Freisprechvorrichtung 15, der Eingabeeinheit 20 und dem Audiogerät 25 organisiert und andererseits die Kommunikation zwischen den genannten elektronischen Komponenten 15, 20, 25, 35 und weiteren über mindestens eine von der Steuerung 45 verschiedene Steuerung an die Busvorrichtung 30 angeschlossenen elektronischen Komponenten ermöglicht.

Über das Schnittstellenmodul 35 ist bei bestehender Funkverbindung 40 das Telekommunikationsendgerät 5 als erste elektronische Komponente an die Steuerung 45 und damit an die Busvorrichtung 30 und somit an das Netz 10 angeschlossen. Die elektronischen Komponenten 15, 20, 25, 35 sind dabei entweder durch ihren gemeinsamen Anschluß an die Steuerung 45 oder durch ihren Anschluß an die Busvorrichtung 30 miteinander vernetzt und bilden das Netz 10, zu dem auch die weiteren, in Figur 1 nicht dargestellten elektronischen Komponenten gehören.

Soll nun die Freisprechvorrichtung 15 für das Telekommunikationsendgerät 5 genutzt werden, so werden über die Funkverbindung 40 die vom Telekommunikationsendgerät 5 empfangenen sowie die vom Telekommunikationsendgerät 5 zu sendenden Audiodaten übertragen. Die Übertragung der Funkverbindung 40 erfolgt dabei in der Regel digital. Die Steuerung 45 führt eine Protokollumsetzung, bspw. eine Pulscodemodulation der vom Schnittstellenmodul 35 empfangenen digitalen Audiodaten des Telekommunikationsendgerätes 5 durch und überträgt die pulscodemodulierten Audiodaten entweder über die Busvorrichtung 30 wie in Figur 1 an die Freisprechvorrichtung 15 oder bei direktem Anschluß der Freisprechvorrichtung 15 an die Steuerung 45 direkt an die Freisprechvorrichtung 15. Nach einer Digital-/Analog-Wandlung in Ditigal-/Analog-Wandler 50 werden die Audiodaten dann vom Lautsprecher 75 wiedergegeben. Vom Mikrophon 80 aufgenommene analoge Audio- beziehungsweise Sprachdaten des Benutzers werden im Analog-/Digital-Wandler 60 digitalisiert und pulscodemoduliert und über die Busvorrichtung 30 gemäß Figur 1 oder bei direktem Anschluß der Freisprechvorrichtung 15 an die Steuerung 45 direkt an die Steuerung 45 übertragen. In der Steuerung 45 werden die pulscodemodulierten digitalen Audiodaten demoduliert beziehungsweise auf ein serielles Protokoll der Schnittstelle 1 umgesetzt und an das Schnittstellenmodul 35 zur Übertragung über die Funkverbindung 40 zum Telekommunikationsendgerät 5 abgegeben.

Im Folgenden wird nur noch die Kommunikation zwischen den in Figur 1 dargestellten elektronischen Komponenten 15, 20, 25, 35 über die Busvorrichtung 30 beschrieben, wobei Entsprechendes für die Kommunikation zwischen diesen Komponenten gilt, wenn sie direkt an die Steuerung 45 angeschlossen sind.

Es kann vorgesehen sein, daß der Lautsprecher 75 der Freisprechvorrichtung 15 auch vom Audiogerät 25 benutzt wird. In diesem Fall kann die Steuerung 45 ein Stummschaltsignal über die Busvorrichtung 30 an das Audiogerät 25 abgeben, wenn über das Schnittstellenmodul 35 Audiosignale zwischen der Freisprechvorrichtung 15 und dem Telekommunikationsendgerät 5 ausgetauscht werden. Auf diese Weise kann das Audiogerät 25 dazu veranlaßt werden, die Abgabe eines Audiosignals zur Wiedergabe über den Lautsprecher 75 der Freisprechvorrichtung 15 zu verhindern. Dabei kann beispielsweise nur zu Beginn der Telekommunikationsverbindung das Stummschaltsignal an das Audiogerät 25 übertragen werden, um die Abgabe des Audiosignals vom Audiogerät 25 zu verhindern. Sobald die Telekommunikationsverbindung beendet ist, kann die Steuerung 45 ein entsprechendes Stummschaltendesignal an das Audiogerät 25 über die Busvorrichtung 30 abgeben, um dem Audiogerät 25 zu signalisieren, daß eine Unterdrückung des Audiosignals des Audiogerätes 25 nicht mehr erforderlich ist. Alternativ könnte während der Dauer der Telekommunikationsverbindung das Stummschaltsignal von der Steuerung 45 über die Busvorrichtung 30 an das Audiogerät 25 abgegeben werden, wobei das Audiogerät 25 die Abgabe des Audiosignals so lange unterdrückt, wie es das Stummschaltsignal empfängt.

Die Tastatur der Eingabeeinheit 20 kann dazu benutzt werden, Einstell- und/oder Anwahlparameter einzugeben. Bei den Einstellparametern kann es sich beispielsweise um die Eingabe einer Kurznachricht handeln, die über das Telekommunikationsendgerät 5 an das Funktelekommunikationsnetz versendet werden soll. Die an der Tastatur der Eingabeeinheit 20 eingegebene Kurznachricht wird dabei über die Busvorrichtung 30 an die Steuerung 45 weitergeleitet und von dort über das Schnittstellenmodul 35 und die Funkverbindung 40 zum Telekommunikationsendgerät 5 übertragen, von wo sie an das Funktelekommunikationsnetz über die erste Funkschnittstelle 70 weitergeleitet wird. Einstellparameter können aber auch Parameter zur Einstellung der Signalisierung eines am Telekommunikationsendgerät 5 eingehenden Rufes sein, wobei die Einstellparameter angeben, ob die Signalisierung über den Lautsprecher 75 oder am Telekommunikationsendgerät 5 und wie die Signalisierung erfolgen soll, also beispielsweise mit welcher Melodie. Beliebige weitere Einstellungen für einzurichtende Telekommunikationsverbindungen können an der Tastatur der Eingabeeinheit 20 eingegeben und über die Busvorrichtung 30 an die Freisprechvorrichtung 15 oder über die Steuerung 45 und das Schnittstellenmodul 35 an das Telekommunikationsendgerät 5 übertragen werden und die gewünschten Einstellungen an der Freisprechvorrichtung 15 oder am Telekommunikationsendgerät 5 veranlassen. Die Tastatur der Eingabeeinheit 20 ist vorzugsweise alphanummerisch ausgebildet und ermöglicht auch die Eingabe von Anwahlparametern, beispielsweise zur Eingabe einer anzuwählenden Rufnummer für eine aufzubauende Telekommunikationsverbindung, wobei diese Rufnummer ebenfalls über die Busvorrichtung 30, die Steuerung 45, das Schnittstellenmodul 35 und die Funkverbindung 40 an das Telekommunikationsendgerät 5 übertragen wird, so daß das Telekommunikationsendgerät 5 mit der gewählten Rufnummer die gewünschte Telekommunikationsverbindung aufbauen kann. Es kann nun vorgesehen sein, daß die Steuerung 45 zu vorgegebenen Zeiten, beispielsweise periodisch ein Abfragesignal an das Schnittstellenmodul 35 abgibt, um zu detektieren, ob das Schnittstellenmodul 35 von der zweiten Funkschnittstelle 65 des Telekommunikationsendgerätes 5 über die Funkverbindung 40 Signale empfangen kann. Sobald dies der Fall ist, teilt das Schnittstellenmodul 35 dies der Steuerung 45 mit, die daraufhin über die Busvorrichtung 30 die Freisprechvorrichtung 15 mittels eines Initialisierungssignals veranlaßt, die Sprachein-/ausgabefunktionalität für das Telekommunikationsendgerät 5 zu übernehmen. Außerdem sendet die Steuerung 45 über das Schnittstellenmodul 35 und die Funkverbindung 40 ein Signal an das Telekommunikationsendgerät 5, um dessen Sprachein-/ausgabefunktionalität zu unterbrechen. Auf diese Weise findet eine automatische Anbindung des Telekommunikationsendgerätes 5 an die Freisprechvorrichtung 15 statt, die die Sprachein-/ausgabefunktionalität des Telekommunikationsendgerätes 5 übernimmt. Das Telekommunikationsendgerät 5 wird somit an das Netz 10 angeschlossen. Ein weiteres Initialisierungssignal wird von der Steuerung 45 an die Eingabeeinheit 20 übertragen, damit eine Gesprächsverbindung oder das Senden einer Kurznachricht von der Eingabeeinheit 20 aus einleitbar ist.

Eine Gesprächsverbindung kann aber auch dadurch zustande kommen, daß am Telekommunikationsendgerät 5 ein Ruf eingeht. Über die Funkverbindung 40 und das Schnittstellenmodul 35 wird dies der Steuerung 45 mitgeteilt, die beispielsweise eine Signalisierung durch den Lautsprecher 75 der Freisprechvorrichtung 15 veranlasst. Dabei kann aufgrund der Unterdrückung der Sprachein-/ausgabefunktionalität des Telekommunikationsendgerätes 5 auch die dortige Signalisierung unterdrückt werden. Die Entgegennahme des eingehenden Rufs kann durch entsprechende Tastenbetätigung an der Eingabeeinheit 20 erfolgen und wird über die Busvorrichtung 30, die Steuerung 45 und das Schnittstellenmodul 35 mittels der Funkverbindung 40 an das Telekommunikationsendgerät 5 zur Weiterleitung an das Funktelekommunikationsnetz abgegeben. Die Gesprächsverbindung kann nun wie beschrieben über die Funkverbindung 40 und die Freisprechvorrichtung 15 erfolgen.

Die Steuerung 45 wird dabei weiterhin zu den vorgegebenen Zeiten, beispielsweise periodisch das Abfragesignal an das Schnittstellenmodul 35 abgeben, um zu prüfen, ob das Schnittstellenmodul 35 noch Funksignale vom Telekommunikationsendgerät 5 erhält. Diese Abfrage erfolgt unabhängig davon, ob eine Telekommunikationsverbindung vorliegt oder nicht.

Die zweite Funkschnittstelle 65 des Telekommunikationsendgerätes 5 sendet zu vorgegebenen Zeiten, beispielsweise periodisch, Steuerinformationen aus, die innerhalb der Reichweite der zweiten Funkschnittstelle 65 empfangen werden können. Das Schnittstellenmodul 35 prüft dabei, ob es solche Steuerinformationen empfängt und detektiert bei Empfang solcher Steuerinformationen die Anwesenheit des Telekommunikationsendgerätes 5, die es der Steuerung 45 auf deren Abfragesignale hin mitteilt. Sobald das Schnittstellenmodul 35 die Steuerinformationen des Telekommunikationsendgerätes 5 empfängt, sendet es seinerseits ein Quittierungsfunksignal an das Telekommunikationsendgerät 5, das von diesem über die zweite Funkschnittstelle 65 empfangen wird und dem Telekommunikationsendgerät 5 mitteilt, daß die Funkverbindung 40 zwischen der zweiten Funkschnittstelle 65 und dem Schnittstellenmodul 35 aufgebaut werden kann. Sobald das Telekommunikationsendgerät 5 über die zweite Funkschnittstelle 65 keine Quittierungsfunksignale mehr vom Schnittstellenmodul 35 empfängt, schaltet es seine Sprachein-/ausgabefunktionalität wieder ein und ist als vollwertiges Telekommunikationsendgerät 5 verwendbar. Für den Nichtempfang der Quittierungssignale des Schnittstellenmoduls 35 in der zweiten Funkschnittstelle 65 des Telekommunikationsendgerätes 5 gibt es zwei mögliche Gründe: Zum Einen kann es sein, daß bei Entfernen des Telekommunikationsendgerätes 5 vom Schnittstellenmodul 35 das Schnittstellenmodul 35 die Steuerinformationen des Telekommunikationsendgerätes 5 nicht mehr empfängt und daher auch keine Quittierungsfunksignale mehr an das Telekommunikationsendgerät 5 sendet. Zum Andern kann es sein, daß die Reichweite des Telekommunikationsendgerätes 5 größer ist als die Reichweite des Schnittstellenmoduls 35, das heißt, daß das Schnittstellenmodul 35 zwar die Steuerinformationen des Telekommunikationsendgerätes 5 noch empfängt und entsprechende Quittierungsfunksignale erzeugt und an das Telekommunikationsendgerät 5 zurück sendet, die Quittierungsfunksignale aber nicht mehr vom Telekommunikationsendgerät 5 empfangen werden. In beiden Fällen ist die Funkverbindung 40 nicht mehr aufrecht zu erhalten und das Telekommunikationsendgerät 5 erhält wieder seine volle Sprachein-/ausgabefunktionalität und ist unabhängig von der Freisprechvorrichtung 15 benutzbar. Das Telekommunikationsendgerät 5 hat sich dann so weit vom Schnittstellenmodul 35 entfernt, daß die Funkverbindung 40 nicht mehr realisierbar ist. Dies ist zum Beispiel dann der Fall, wenn der Benutzer des Telekommunikationsendgerätes 5 sein Fahrzeug verläßt und das Telekommunikationsendgerät 5 mitnimmt.

Wenn nun das Schnittstellenmodul 35 vom Telekommunikationsendgerät 5 keine Steuerinformationen mehr empfängt, so teilt es dies als Antwort auf ein entsprechendes Abfragesignal der Steuerung 45 mit, die daraufhin ein Deinitialisierungssignal an die Freisprechvorrichtung 15 über die Busvorrichtung 30 abgibt, um die Sprachein-/ausgabefunktionalität der Freisprechvorrichtung 15 für Telekommunikationsverbindungen zu beenden. Entsprechend überträgt die Steuerung 45 ein Deinitialisierungssignal an die Eingabeeinheit 20 über die Busvorrichtung 30, um die Funktionalität der Eingabeeinheit 20 zur Eingabe der Einstell-und/oder Anwahlparameter zu beenden.

In Figur 2 ist eine zweite Ausführungsform der Erfindung dargestellt, bei der gleiche Bezugszeichen gleiche Elemente kennzeichnen wie in Figur 1. Ausgehend von Figur 1 unterscheidet sich die zweite Ausführungsform von der ersten Ausführungsform dadurch, daß zwischen der Freisprechvorrichtung 15 und der Steuerung 45 eine separate Leitung 55 zur Übertragung analoger Audiodaten vorgesehen ist. Dazu ist die Steuerung 45 einerseits über den Digital-/Analog-Wandler 50 und andererseits über den Analog-/Digital-Wandler 60 mit der Freisprechvorrichtung 15 verbunden, wobei der Digital-/Analog-Wandler 50 und der Analog-/Digital-Wandler 60 gemäß Figur 2 beispielsweise in der Schnittstelle 1 angeordnet sein können. Bei der zweiten Ausführungsform werden die vom Telekommunikationsendgerät 5 in der Steuerung 45 empfangenen digitalen Audiodaten vom Digital-/Analog-Wandler 50 in analoge Audiodaten umgewandelt und über die Leitung 55 an die Freisprechvorrichtung 15 zur Wiedergabe an Lautsprecher 75 abgegeben. Entsprechend werden die vom Mikrophon 80 aufgenommenen analogen Audiodaten über die Leitung 55 an den Analog-/Digital-Wandler 60 übertragen, dort in digitale Audiodaten umgewandelt und an die Steuerung 45 weitergeleitet, von wo sie über das Schnittstellenmodul 35 an das Telekommunikationsendgerät 5 abgegeben werden. Wie auch bei der ersten Ausführungsform werden bei der zweiten Ausführungsform die im Telekommunikationsendgerät 5 vom Schnittstellenmodul 35 empfangenen digitalen Audiodaten über die erste Funkschnittstelle 70 an das Funktelekommunikationsnetz übertragen. Umgekehrt werden die vom Funktelekommunikationsnetz über die erste Funkschnittstelle 70 im Telekommunikationsendgerät 5 empfangene digitalen Audiodaten über die zweite Funkschnittstelle 65, die Funkverbindung 40 und das Schnittstellenmodul 35 an die Steuerung 45 übertragen.

Die Leitung 55 kann beispielsweise zweiadrig ausgebildet sein für die unterschiedlichen Übertragungsrichtungen, wie in Figur 2 dargestellt. Über die Busvorrichtung 30 werden dann nur Steuerdaten, wie beispielsweise die Initialisierungssignale übertragen, wohin gegen die Audiosignale über die Leitung 55 übertragen werden.

Es kann natürlich umgekehrt auch vorgesehen sein, daß für die Detektion eines in der Nähe des Schnittstellenmoduls 35 befindlichen Telekommunikationsendgerätes 5 das Schnittstellenmodul 35 und nicht das Telekommunikationsendgerät 5 die Steuerinformationen in Form von Abfrageinformationen zu vorgegebenen Zeiten, beispielsweise periodisch, abstrahlt und das Telekommunikationsendgerät 5 bei Empfang dieser Abfrageinformationen über die zweite Funkschnittstelle 65 jeweils ein entsprechendes Quittierungsfunksignal abstrahlt, das wiederum vom Schnittstellenmodul 35 empfangen wird. Empfängt das Schnittstellenmodul 35 ein solches Quittierungsfunksignal, so teilt es der Steuerung 45 auf das entsprechende Abfragesignal hin mit, daß eine Funkverbindung 40 zum Telekommunikationsendgerät 5 aufgebaut werden kann. Anschließend erfolgt der beschriebene Initialisierungsvorgang, bei dem die Sprachein/ausgabefunktionalität vom Telekommunikationsendgerät 5 auf die Freisprechvorrichtung 15 übertragen wird. Wenn sich das Telekommunikationsendgerät 5 so weit vom Schnittstellenmodul 35 entfernt, daß es die Abfrageinformationen nicht mehr über die zweite Funkschnittstelle 65 empfangen kann, so wird auch kein Quittierungsfunksignal vom Telekommunikationsendgerät 5 mehr abgestrahlt und das Schnittstellenmodul 35 kann kein solches Quittierungsfunksignal mehr empfangen und teilt der Steuerung 45 auf das entsprechende Abfragesignal hin mit, daß keine Funkverbindung 40 mehr zum Telekommunikationsendgerät 5 aufgebaut werden kann. Daraufhin leitet die Steuerung 45 den beschriebenen Deinitialisierungsvorgang ein, bei dem die Sprachein-/ausgabefunktionalität für Telekommunikationsverbindungen bei der Freisprechvorrichtung 15 beendet wird. Entsprechend wird die Sprachein-/ausgabefunktionalität des Telekommunikationsendgerätes 5 von diesem selbsttätig wieder aktiviert, wenn innerhalb eines vorgegebenen Zeitraums von der letzten empfangenen Abfrageinformation an keine weitere Abfrageinformation mehr vom Schnittstellenmodul 35 im Telekommunikationsendgerät 5 empfangen wird.

Wird eine bestehende Telekommunikationsverbindung mit dem Funktelekommunikationsnetz unter Verwendung der Funkverbindung 40 durch Eingabe an der Eingabeeinheit 20 beendet, so wird eine entsprechende Endesteuerinformation von der Eingabeeinheit 20 über die Busvorrichtung 30 an die Steuerung 45 übertragen, die daraufhin der Freisprechvorrichtung 15 über die Busvorrichtung 30 und dem Telekommunikationsendgerät 5 über das Schnittstellenmodul 35 und die Funkverbindung 40 mitteilt, daß die bestehende Telekommunikationsverbindung beendet werden soll, woraufhin das Telekommunikationsendgerät 5 den Abbruch der Telekommunikationsverbindung mit dem Funktelekommunikationsnetz einleitet. Außerdem sendet die Steuerung 45 über die Busvorrichtung 30 ein entsprechendes Steuersignal an das Audiogerät 25, um die Stummschaltung des Audiogerätes 25 zu beenden. Alternativ kann ein während der Telekommunikationsverbindung erfolgtes dauerhaftes Senden des Stummschaltsignals von der Steuerung 45 über die Busvorrichtung 30 an das Audiogerät 25 beendet werden. Wird das Gespräch vom Funktelekommunikationsnetz aus beendet, so erfolgt eine entsprechende Statusmeldung vom Telekommunikationsendgerät 5 über die Funkverbindung 40 und das Schnittstellenmodul 35 an die Steuerung 45, die diese Information an die Freisprechvorrichtung 15 über die Busvorrichtung 30 weiterleitet und in der beschriebenen Weise auch die Stummschaltung des Audiogerätes 25 beendet.

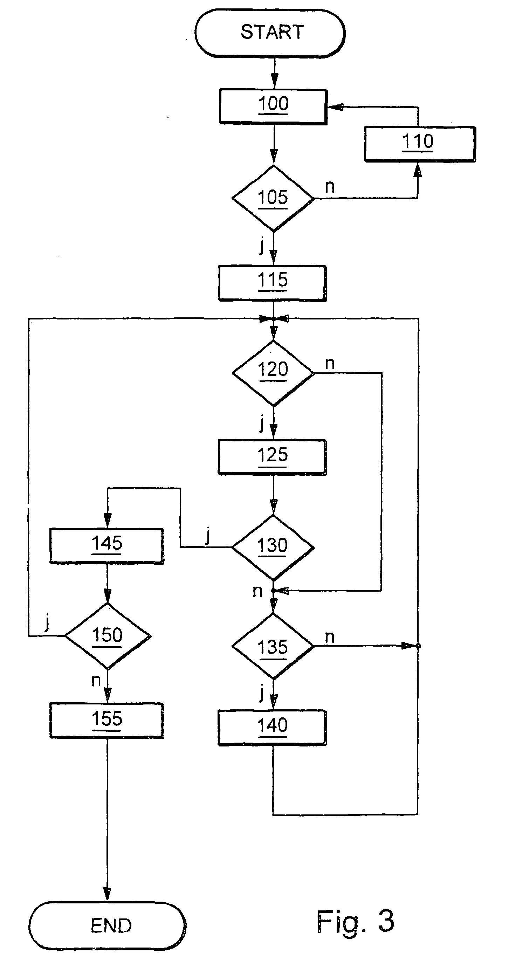

Im Folgenden wird anhand von Figur 3 die Funktionsweise der Steuerung 45 anhand eines Ablaufplanes erläutert. Bei einem Programmpunkt 100 setzt die Steuerung 45 ein Abfragesignal an das Schnittstellenmodul 35 ab, um zu prüfen, ob die Funkverbindung 40 zum Telekommunikationsendgerät 5 aufgebaut werden kann. Anschließend wird zu einem Programmpunkt 105 verzweigt. Bei Programmpunkt 105 prüft die Steuerung 45, ob das Schnittstellenmodul 35 auf das Abfragesignal hin mitteilt, daß die Funkverbindung 40 zum Telekommunikationsendgerät 5 aufgebaut werden kann. Ist dies der Fall, so wird zu einem Programmpunkt 115 verzweigt, andernfalls wird zu einem Programmpunkt 110 verzweigt. Bei Programmpunkt 110 läuft eine vorgegebene Wartezeit ab. Anschließend wird zu Programmpunkt 100 zurück verzweigt. Bei Programmpunkt 115 erfolgt die beschriebene Initialisierung, bei der die Sprachein-/ausgabefunktionalität beim Telekommunikationsendgerät 5 auf Veranlassung der Steuerung 45 abgeschaltet und auf die Freisprechvorrichtung 15 übertragen wird. Weiterhin veranlaßt die Steuerung 45 in der beschriebenen Weise auch die Initialisierung der Eingabeeinheit 20, um über die Eingabeeinheit 20 das Telekommunikationsendgerät 5 bedienen zu können. Anschließend wird zu einem Programmpunkt 120 verzweigt. Bei Programmpunkt 120 prüft die Steuerung 45, ob eine Telekommunikationsverbindung über das Telekommunikationsendgerät 5 zum Funktelekommunikationsnetz aufgebaut werden soll oder noch im Gange ist. Ist dies der Fall, so wird zu einem Programmpunkt 125 verzweigt, andernfalls wird zu einem Programmpunkt 135 verzweigt. Bei Programmpunkt 125 informiert die Steuerung 45 in der beschriebenen Weise das Telekommunikationsendgerät 5 und die Freisprechvorrichtung 15 über den geplanten Verbindungsaufbau, wenn er von der Eingabeeinheit 20 ausgeht und lediglich die Freisprechvorrichtung 15, wenn der geplante Verbindungsaufbau vom Funktelekommunikationsnetz aus initiiert wird. Weiterhin veranlaßt die Steuerung 45 die Stummschaltung des Audiogerätes 25 in der beschriebenen Weise. Anschließend wird zu einem Programmpunkt 130 verzweigt. Bei Programmpunkt 130 prüft die Steuerung 45, ob die Telekommunikationsverbindung von der Eingabeeinheit 20 aus oder vom Funktelekommunikationsnetz aus beendet wurde. Ist dies der Fall, so wird zu einem Programmpunkt 145 verzweigt, andernfalls wird zu Programmpunkt 135 verzweigt. Bei Programmpunkt 135 prüft die Steuerung 45, ob an der Eingabeeinheit 20 Einstell-und/oder Anwahlparameter eingegeben wurden. Ist dies der Fall, so wird zu einem Programmpunkt 140 verzweigt, andernfalls wird zu Programmpunkt 120 zurück verzweigt. Bei Programmpunkt 140 werden die von der Steuerung 45 über die Busvorrichtung 30 empfangenen Einstell-und/oder Anwahlparameter ausgewertet, wobei die Anwahlparameter, die eine anzuwählende Rufnummer umfassen können, über die Funkverbindung 40 zum Telekommunikationsendgerät 5 mit der Aufforderung eines Verbindungsaufbaus mit der entsprechenden Rufnummer übertragen werden und wobei die Einstellparameter je nach dem, ob die Einstellung am Telekommunikationsendgerät 5 oder an der Freisprechvorrichtung 15 erfolgen soll von der Steuerung 45 an das Telekommunikationsendgerät 5 oder an die Freisprechvorrichtung 15 übertragen werden. Handelt es sich bei den Einstellparametern um eine vom Benutzer an der Eingabeeinheit 20 eingegebene Aufforderung, eine bestehende Stummschaltung aufzuheben, so veranlaßt die Steuerung 45 das Audiogerät 25 über die Busvorrichtung 30 in der beschriebenen Weise zur Aufhebung der Stummschaltung. Anschließend wird zu Programmpunkt 120 zurück verzweigt. Bei Programmpunkt 145 teilt die Steuerung 45 der Freisprechvorrichtung 15 mit, daß die Telekommunikationsverbindung nun beendet ist. Wurde die Telekommunikationsverbindung an der Eingabeeinheit 20 beendet, so teilt die Steuerung 45 außerdem über die Funkverbindung 40 dem Telekommunikationsendgerät 5 mit, daß die Telekommunikationsverbindung beendet wurde. Weiterhin veranlaßt die Steuerung 45 in der beschriebenen Weise die Aufhebung der Stummschaltung des Audiogerätes 25. Anschließend wird zu einem Programmpunkt 150 verzweigt. Bei Programmpunkt 150 prüft die Steuerung 45 in der beschriebenen Weise anhand der Auswertung der Abfragesignale, ob das Schnittstellenmodul 35 das Telekommunikationsendgerät 5 noch als anwesend detektiert. Ist dies der Fall, so wird zu Programmpunkt 120 zurück verzweigt, andernfalls wird zu einem Programmpunkt 155 verzweigt. Bei Programmpunkt 155 veranlaßt die Steuerung 45 in der beschriebenen Weise die Deinitialisierung mittels des an die Freisprechvorrichtung 15 und an die Eingabeeinheit 20 jeweils über die Busvorrichtung 30 versendeten Deinitialisierungssignals.

Das Gesprächsende bei Programmpunkt 130 kann von der Steuerung 45 auch dadurch detektiert werden, daß auf ein Abfragesignal hin das Schnittstellenmodul 35 der Steuerung 45 mitteilt, daß das Telekommunikationsendgerät 5 abwesend ist, das heißt, daß die Funkverbindung 40 abgebrochen ist. Nach Programmpunkt 155 wird das Programm verlassen.

Während einer Telekommunikationsverbindung bleibt das Telekommunikationsendgerät 5 als Funksende-/-empfangseinheit für die Verbindung mit dem Funktelekommunikationsnetz aktiv. Dabei kann es sich um ein GSM-Netz (Global System for Mobile Communications), ein UMTS-Netz (Universal Mobile Telecommunication System), oder dergleichen handeln. Sinnvollerweise wird die Funkverbindung 40 in einem anderen Frequenzbereich betrieben als die Funkverbindung zwischen dem Telekommunikationsendgerät 5 und dem Funktelekommunikationsnetz, damit keine gegenseitigen Störungen auftreten. Dies ist bei der Verwendung des Bluetooth-Standards für die Funkverbindung 40 und einer GSM-Funkverbindung oder einer UMTS-Funkverbindung zwischen dem Telekommunikationsendgerät 5 und dem Funktelekommunikationsnetz gewährleistet.

Die Verbindung zwischen der Steuerung 45 und dem Schnittstellenmodul 35 kann über eine serielle Schnittstelle erfolgen.

Ferner kann es vorgesehen sein, daß zusätzlich oder alternativ als fünfte elektronische Komponente eine weitere Wiedergabevorrichtung eine in den Figuren nicht dargestellte Anzeigevorrichtung vorgesehen und an die Busvorrichtung 30 oder direkt an die Steuerung 45 angeschlossen ist. Die Anzeigevorrichtung kann dabei ebenfalls für das Anzeigen telekommunikationsrelevanter Daten, wie beispielsweise Text- oder Grafikdaten einer Text- oder Grafiknachricht, von der Steuerung 45 initialisiert beziehungsweise deinitialisiert werden, wie dies beispielsweise für die Eingabeeinheit 20 beschrieben wurde. An der Anzeigevorrichtung können dann beispielsweise über die Funkverbindung 40 vom Telekommunikationsendgerät 5 im Schnittstellenmodul 35 empfangene Textdaten, beispielsweise SMS-Nachrichten (Short Message Service) bei Verwendung des GSM-Standards, oder Grafikdaten dargestellt werden.

Weiterhin kann es vorgesehen sein, als sechste elektronische Komponente an die Busvorrichtung 30 oder direkt an die Steuerung 45 ein Navigationssystem als Verarbeitungsvorrichtung anzuschließen und dort aus dem Funktelekommunikationsnetz über das Telekommunikationsendgerät 5 und die Funkverbindung 40 vom Schnittstellenmodul 35 empfangene Verkehrsinformationen zu verarbeiten, wozu das Navigationssystem zum Empfang solcher Informationen ebenfalls in der beispielsweise zur Eingabeeinheit 20 beschriebenen Weise von der Steuerung 25 initialisiert und auch wieder deinitialisiert werden kann. Eine Darstellung oder Wiedergabe von Navigationsinformationen beispielsweise zur Routenführung ist dann über die Anzeigevorrichtung möglich.

Die Text- oder Grafikdaten beziehungsweise die Verkehrsinformationen werden von der Steuerung 45 über die Busvorrichtung 30 beziehungsweise direkt an die Anzeigevorrichtung beziehungsweise das Navigationssystem zur Anzeige beziehungsweise zur Verarbeitung weitergeleitet. Die Anzeigevorrichtung beziehungsweise das Navigationssystem sind dabei ebenfalls solange initialisiert, das heißt für den Empfang und die Verarbeitung von entsprechenden Daten des Telekommunikationsendgerätes 5 eingestellt, solange das Telekommunikationsendgerät 5 vom Schnittstellenmodul 35 als anwesend detektiert wird. Aufgrund der Funkverbindung 40 muß das Telekommunikationsendgerät 5 für eine Telekommunikationsverbindung nicht mehr vom Benutzer bedient werden und kann deshalb beispielsweise in einer Tasche des Benutzers verbleiben. Eine Verkabelung zwischen der Freisprechvorrichtung 15 und dem Telekommunikationsendgerät 5 ist nicht erforderlich oder würde sich auf ein Kabel zur Zuführung einer Akku-Ladespannung beschränken. Die Übertragung sämtlicher Daten, also Audiodaten und Steuerdaten, zwischen den einzelnen elektronischen Komponenten über die Busvorrichtung 30 oder direkt über die Steuerung 45 erfolgt vorzugsweise digital mit Ausnahme der zu Figur 2 beschriebenen analogen Übertragung der Audiodaten zwischen der Schnittstelle 1 und der Freisprechvorrichtung 15. Die Funkverbindung 40 erfolgt bei Verwendung des Bluetooth-Standards in einem Frequenzbereich bei etwa 2,4 GHz. Die am Tastenfeld der Eingabeeinheit 20 eingegebenen Einstell-und/oder Anwahlparameter werden bereits von der Eingabeeinheit 20 in digitaler Form auf die Busvorrichtung 30 oder direkt an die Steuerung 45 abgegeben.

Das Telekommunikationsendgerät 5 kann als Funkgerät, als Mobiltelefon, als Organizer, als Personal digital assistant (PDA), als Personal Computer (PC) oder als Notebook mit entsprechender Funkschnittstelle zum Funktelekommunikationsnetz ausgebildet sein.

Alternativ kann es auch vorgesehen sein, dass das Telekommunikationsendgerät 5 keine Funkschnittstelle zum Funktelekommunikationsnetz umfaßt und die Kommunikation über die Funkverbindung 40 und die Schnittstelle 1 mit den elektronischen Komponenten des Netzes 10 erfolgt. Auch in diesem Fall können die über die Funkverbindung 40 ausgetauschten Daten Audiodaten, Textdaten, Grafikdaten oder Steuerinformationen sein. Das Telekommunikationsendgerät 5 kann in diesem Fall als Organizer, als Personal Digital Assistant (PDA), als Personal Computer (PC) oder als Notebook, jedoch ohne Funkschnittstelle zum Funktelekommunikationsnetz ausgebildet sein.

## Patentansprüche

1. Schnittstelle zum Anschluss einer ersten elektronischen Komponente (5) an ein eine Busvorrichtung (30) umfassendes Fahrzeugnetz (10) mehrerer weiterer elektronischer Komponenten (15, 20, 25), die an die Busvorrichtung (30) angeschlossen sind, wobei
- die erste elektronische Komponente (5) als Telekommunikationsendgerät ausgebildet ist,
- eine zweite an die Busvorrichtung (30) angeschlossene elektronische Komponente (15) als Wiedergabe- oder Verarbeitungsvorrichtung für Daten des Telekommunikationsendgeräts ausgebildet ist,
- die Schnittstelle (1), die Daten zwischen der Wiedergabe- oder Verarbeitungsvorrichtung (15) und dem Telekommunikationsendgerät (5) überträgt,
- die Schnittstelle (1) an die Busvorrichtung (30) angeschlossen ist und eine Steuerung (45) umfasst, die einerseits mit der Busvorrichtung (30) und andererseits mit einem Schnittstellenmodul (35) der Schnittstelle (1) verbunden ist,
- die Steuerung (45) den Austausch der Daten zwischen der Wiedergabe- oder Verarbeitungsvorrichtung und dem Telekommunikationsendgerät über das Schnittstellenmodul steuert,
- zwischen dem Schnittstellenmodul (35) und einer Funkschnittstelle des Telekommunikationsendgeräts (5) eine Funkverbindung aufgebaut wird,
- eine dritte elektronische Komponente (20) als Eingabeeinheit ausgebildet ist,
- die Eingabeeinheit (20) an die Busvorrichtung (30) angeschlossen ist
- die Schnittstelle (1) an der Eingabeeinheit (20) eingegebene Einstell- und/oder Anwahlparameter empfängt und an die Wiedergabe- und/oder Verarbeitungsvorrichtung (15) oder an das Telekommunikationsendgerät (5) überträgt,
- die Steuerung (45) zu vorgegebenen Zeiten, vorzugsweise periodisch, ein Abfragesignal an das Schnittstellenmodul (35) abgibt, um das Vorhandensein des Telekommunikationsendgerätes (5) zu prüfen,
- die Wiedergabe- und Verarbeitungsvorrichtung (15) als Freisprechvorrichtung ausgebildet ist,
- die Steuerung (45) bei Detektion des Telekommunikationsendgerätes (5) je ein Initialisierungssignal an die Freisprechvorrichtung (15) und an das Schnittstellenmodul (35) zur Übertragung an das Telekommunikationsendgerät (5) abgibt, um die Sprachein-/ausgabefunkdonalität auf die Freisprechvorrichtung (15) zu übertragen,
- und wobei die Steuerung (45) die Initialisierung der Eingabeeinheit (20) veranlasst, um über die Eingabeeinheit (20) das Telekommunikationsendgerät (5) bedienen zu können.

2. Schnittstelle (1) nach Anspruch 1, **dadurch gekennzeichnet, dass** das Telekommunikationsendgerät (5) über eine Bluetooth-Verbindung an das Schnittstellenmodul (35) angeschlossen ist.

3. Schnittstelle (1) nach einem der vorherigen Ansprüche, **dadurch gekennzeichnet, dass** die Schnittstelle (1) Audiodaten in digitaler Form zwischen der Freisprechvorrichtung (15) und dem Telekommunikationsendgerät (5), insbesondere nach einem Pulscodeverfahren moduliert, überträgt.

4. Schnittstelle (1) nach Anspruch 3, **dadurch gekennzeichnet, dass** die Schnittstelle (1) einen Digital-/Analogwandler (50) umfaßt, der vom Schnittstellenmodul (35) empfangene digitale Audiodaten in analoge Audiodaten umwandelt und dass eine separate Leitung (55) zwischen der Schnittstelle (1) und der Freisprechvorrichtung (15) vorgesehen ist, über die analoge Audiodaten zwischen der Freisprechvorrichtung (15) und der Schnittstelle (1) übertragen werden.

5. Schnittstelle (1) nach Anspruch 1, **dadurch gekennzeichnet, dass** die Schnittstelle (1) einen Analog-/Digitalwandler (60) umfaßt, der von der Freisprechvorrichtung (15) empfangene analoge Audiodaten in digitale Audiodaten umwandelt.

6. Schnittstelle (1) nach Anspruch 1, **dadurch gekennzeichnet, dass** die Steuerung (45) je ein Deinitialisierungssignal an die Frelsprechvorrichtung (15) abgibt, um die Sprachein-/ausgabefunktionalität der Freisprechvorrichtung (15) für Telekommunikationsverbindungen zu beenden, sobald sie auf das Abfragesignal die Abwesenheit des Telekommunikationsendgerätes (5) detektiert.

7. Schnittstelle (1) nach einem der vorherigen Ansprüche, **dadurch gekennzeichnet, dass** als vierte elektronische Komponente (25) ein Audiogerät an das Netz (10) angeschlossen ist und dass die Steuerung (45) ein Stummschaltsignal an das Audiogerät (25) abgibt, wenn Ober das Schnittstellenmodul (35) Audiosignale zwischen der Freisprechvorrichtung (15) und dem Telekommunikationsendgerät (5) ausgetauscht werden.

## Claims

1. Interface for the connection of a first electronic component (5) to a vehicle network (10), comprising a bus apparatus (30), of a plurality of further electronic components (15, 20, 25) which are connected to the bus apparatus (30), wherein
- the first electronic component (5) is in the form of a telecommunication terminal,
- a second electronic component (15), which is connected to the bus apparatus (30), is in the form of a reproduction or processing apparatus for data from the telecommunication terminal,
- the interface (1) transmits the data between the reproduction or processing apparatus (15) and the telecommunication terminal (5),
- the interface (1) is connected to the bus apparatus (30) and comprises a controller (45) which is connected firstly to the bus apparatus (30) and secondly to an interface module (35) of the interface (1),
- the controller (45) controls the interchange of the data between the reproduction or processing apparatus and the telecommunication terminal via the interface module,
- a radio link is set up between the interface module (35) and a radio interface of the telecommunication terminal (5),
- a third electronic component (20) is in the form of an input unit,
- the input unit (20) is connected to the bus apparatus (30),
- the interface (1) receives setting and/or selection parameters which are input on the input unit (20) and transmits them to the reproduction and/or processing apparatus (15) or to the telecommunication terminal (5),
- the controller (45) outputs an interrogation signal to the interface module (35) at prescribed times, preferably periodically, in order to check the presence of the telecommunication terminal (5),
- the reproduction and processing apparatus (15) is in the form of a hands-free apparatus,
- the controller (45), upon detecting the telecommunication terminal (5), outputs a respective initialization signal to the hands-free apparatus (15) and to the interface module (35) for transmission to the telecommunication terminal (5), in order to transmit the voice input/output functionality to the hands-free apparatus (15),
- and wherein the controller (45) prompts the initialization of the input unit (20) in order to be able to control the telecommunication terminal (5) using the input unit (20).

2. Interface (1) according to Claim 1, **characterized in that** the telecommunication terminal (5) is connected to the interface module (35) by means of a Bluetooth link.

3. Interface (1) according to one of the preceding claims, **characterized in that** the interface (1) transmits audio data in digital form between the hands-free apparatus (15) and the telecommunication terminal (5), particularly with modulation on the basis of a pulse code method.

4. Interface (1) according to Claim 3, **characterized in that** the interface (1) comprises a digital/analogue converter (50) which converts digital audio data received from the interface module (35) into analogue audio data and **in that** a separate line (55) is provided between the interface (1) and the hands-free apparatus (15) and is used to transmit analogue audio data between the hands-free apparatus (15) and the interface (1).

5. Interface (1) according to Claim 1, **characterized in that** the interface (1) comprises an analogue/digital converter (60) which converts analogue audio data received from the hands-free apparatus (15) into digital audio data.

6. Interface (1) according to Claim 1, **characterized in that** the controller (45) outputs a respective deinitialization signal to the hands-free apparatus (15) in order to terminate the voice input/output functionality of the hands-free apparatus (15) for telecommunication links as soon as it detects the absence of the telecommunication terminal (5) by virtue of the interrogation signal.

7. Interface (1) according to one of the preceding claims, **characterized in that** an audio appliance is connected to the network (10) as a fourth electronic component (25) and **in that** the controller (45) outputs a mute signal to the audio appliance (25) if the interface module (35) is being used to interchange audio signals between the hands-free apparatus (15) and the telecommunication terminal (5).

## Revendications

1. Interface de raccordement d'un premier composant électronique (5) au réseau (10) d'un véhicule qui comprend un dispositif de bus (30) et plusieurs autres composants électroniques (15, 20, 25) raccordés au dispositif de bus (30),
le premier composant électronique (5) étant configuré comme terminal de télécommunication,
un deuxième composant électronique (15) raccordé au dispositif de bus (30) étant configuré comme dispositif de reproduction ou de traitement de données du terminal de télécommunication,
une interface (1) transmettant les données entre le dispositif (15) de reproduction ou de traitement et le terminal de télécommunication (5),
l'interface (1) étant raccordée au dispositif de bus (30) et présentant une commande (45) reliée d'une part au dispositif de bus (30) et d'autre part à un module d'interface (35) de l'interface (1),
la commande (45) commandant l'échange de données entre le dispositif de reproduction ou de traitement et le terminal de télécommunication par l'intermédiaire du module d'interface,
une liaison radio étant établie entre le module d'interface (35) et une interface radio du terminal de télécommunication (5),
un troisième composant électronique (20) étant configuré comme unité d'introduction,
l'unité d'introduction (20) étant raccordée au dispositif de bus (30),
l'interface (1) recevant des paramètres de réglage et/ou de sélection introduits sur l'unité d'introduction (20) et les transmettant au dispositif (15) de reproduction et/ou de traitement ou au terminal de télécommunication (5),
la commande (45) délivrant à des instants prédéterminés et de préférence périodiquement un signal d'interrogation au module d'interface (35) pour vérifier la présence du terminal de télécommunication (5),
le dispositif (15) de reproduction et de traitement étant configuré comme dispositif dit mains libres,
la commande (45) délivrant lors de la détection du terminal de télécommunication (5) un signal d'initialisation au dispositif dit mains libres (15) et au module d'interface (35) pour transmission au terminal de télécommunication (5) pour transmettre la fonction d'entrée et/ou de sortie vocale au dispositif dit mains libres (15),
la commande (45) lançant l'initialisation de l'unité d'introduction (20) pour pouvoir utiliser le terminal de télécommunication (5) par l'intermédiaire de l'unité d'introduction (20).

2. Interface (1) selon la revendication 1, **caractérisée en ce que** le terminal de télécommunication (5) est raccordé au module d'interface (35) par une liaison dite Bluetooth.

3. Interface (1) selon l'une des revendications précédentes, **caractérisée en ce que** l'interface (1) transmet des données audio sous forme numérique entre le dispositif dit mains libres (15) et le terminal de télécommunication (5), en particulier en les modulant par un procédé de codage d'impulsions.

4. Interface (1) selon la revendication 3, **caractérisée en ce que** l'interface (1) comprend un convertisseur numérique-analogique (50) qui convertit en données audio analogiques les données audio numériques reçues par le module d'interface (35) et **en ce qu'**un conducteur (55) distinct est prévu entre l'interface (1) et le dispositif mains libres (15) par lequel les données audio numériques sont transmises entre le dispositif mains libres (15) et l'interface (1).

5. Interface (1) selon la revendication 1, **caractérisée en ce que** l'interface (1) comprend un convertisseur analogique-numérique (60) qui convertit en données audio numériques les données audio analogiques reçues par le dispositif dit mains libres (15).

6. Interface (1) selon la revendication 1, **caractérisée en ce que** la commande (45) délivre un signal de désinitialisation au dispositif dit mains libres (15) pour terminer la fonctionnalité d'entrée et/ou de sortie vocale du dispositif dit mains libres (15) pour la liaison de télécommunication dès qu'elle détecte sur le signal d'interrogation l'absence du terminal de télécommunication (5).

7. Interface (1) selon l'une des revendications précédentes, **caractérisée en ce que** comme quatrième composant électronique (25), un appareil audio est raccordé au réseau (10) et **en ce que** la commande (45) délivre à l'appareil audio (25) un signal de commutation sur "muet" si des signaux audio sont échangés entre le dispositif dit mains libres (15) et le terminal de télécommunication (5) par l'intermédiaire du module d'interface (35).
